# EUROPEAN PATENT APPLICATION

(11) **EP 2 052 896 A1**
(43) Date of publication of application: **29.04.2009**
(21) Application number: 08017325.5
(22) Date of filing: 01.10.2008
(51) Int. Cl.: B60J 5/06, E05F 15/14, E05D 15/10

(54) **Swinging and sliding door opening and closing system**

(30) Priority: 25.10.2007 JP 2007278124
(71) Applicant: MITSUBISHI JIDOSHA KOGYO KABUSHIKI KAISHA, Tokyo (JP)
(72) Inventor: Arao, Tohru, Tokyo (JP); Uchikata, Toshiaki, Tokyo (JP)
(74) Representative: Vossius & Partner

(57) **Abstract**

A swinging and sliding door opening and closing system (U), includes: a door (4), which is adapted to swing and slide to open and close a door opening in a body of a vehicle, and to which a longitudinally long rail (22) is integrally attached; a parallel link (16), adapted to support the door by a pair of front (31) and rear (32) arms, pivotally supporting ends of the arms connected to a fixed member (15) on the body, swinging ends of the arms connected to a slider (24) which is fittingly attached to the rail of the door in a slidable fashion; a motor driven drum (46), provided on one of the door and the body; a cable (49,51), adapted to be operated by the drum (46); and a cable end (Pce,Poe), provided on the other of the door and the body, and connected to the cable (49,51), the cable end (Poe,Pce) formed with an arc-shaped curved groove (74) round which the cable is wound.

## Description

The present invention relates to a swinging and sliding door opening and closing system for driving to open and close a swinging and sliding door which opens and closes a doorway provided in a side wall of a vehicle as an entrance to and an exit from the vehicle.

A swinging and sliding door installed on a vehicle can swing to project transversely outwards from a state in which the door closes a doorway provided in the vehicle as an entrance to and a exit from the vehicle and thereafter can slide to the rear to fully open the doorway. The swinging and sliding door is supported movably on a body side of the vehicle by a swinging and sliding unit which utilizes a parallel link which can control a movable position of the door.
Examples of doors which utilize such a swinging and sliding unit are disclosed in JP-A-10-175444 and JP-A-2007-196925.

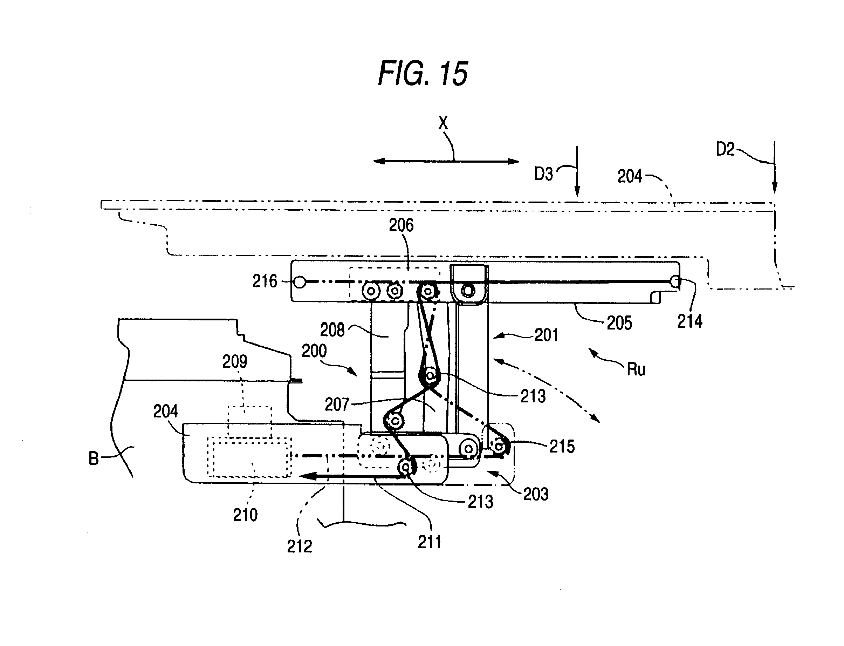

Here, a swinging and sliding door disclosed in JP-A-10-175444 is operated manually to be opened or closed, and a swinging and sliding door disclosed in JP-A-2007-196925 is operated to be opened or closed by an opening and driving mechanism which includes a motor.
For example, as is shown in Fig. 15, a swinging and sliding unit RU used in a swinging and sliding door includes a parallel link 200, a support arm 201 for supporting a door load and an opening and closing drive mechanism 203 for swinging the parallel link and the support arm. The parallel link 200 includes a pair of front and rear arms 207, 208 which are connected to a body side bracket 204 at front and rear pivotally supporting ends and are connected to a slider 206 which is fittingly attached to a rail 205 on a door 204 side at front and rear swinging ends. The opening and closing drive mechanism 203 includes a motor 209 which is supported on the body side bracket 204, a winding drum 210 which is driven by the motor 209, an opening cable and a closing cable 212 which are connected to the winding drum 210 in such a manner as to be wound on and unwound from the winding drum 210, a plurality of pulleys 213 round which the opening cable 211 is passed, a front cable end 214 on the door 204 side, a plurality of pulleys 215 round which the closing cable 212 is passed and a rear cable end 216 on the door side.

Here, when the winding drum 210 winds up the opening cable 211, the front cable end 214 receives a tensile force in an opening direction (leftwards in Fig. 15), and at the same time, the parallel link 200 swings in the opening direction by virtue of a tensile force applied to the plurality of pulleys 213 on the parallel link 200. When the winding drum 210 winds up the closing cable 212, the rear cable end 216 receives a tensile force in a closing direction (rightwards in Fig. 15), and at the same time, the parallel link 200 swings in the closing direction by virtue of a tensile force applied to the plurality of pulleys 215 on the parallel link 200.

Because of this, the door 204, which is adapted to swing and slide, can move to a projecting position (a swung position) D2 which projects to an outside of the vehicle from a closed position and an open position (a fully open position: viewed as indicated by an arrow) D3 which lies rearwards of the projecting position D2.

-Incidentally, in the case of the opening and closing drive mechanism 203 shown in Fig. 15, the motor 209, the winding drum 210 and the cable passing round pulleys 213, 215 are provided on the base member 204 on a body floor B which constitutes a body side equipment mounting area, and a problem is easy to be caused in ensuring the mounting area. Then, it is considered to solve the problem of ensuring the mounting area by reducing the body side mounting area by adopting a configuration in which the motor driven winding drum is provided on the door side, while the cable ends are disposed on the body side.

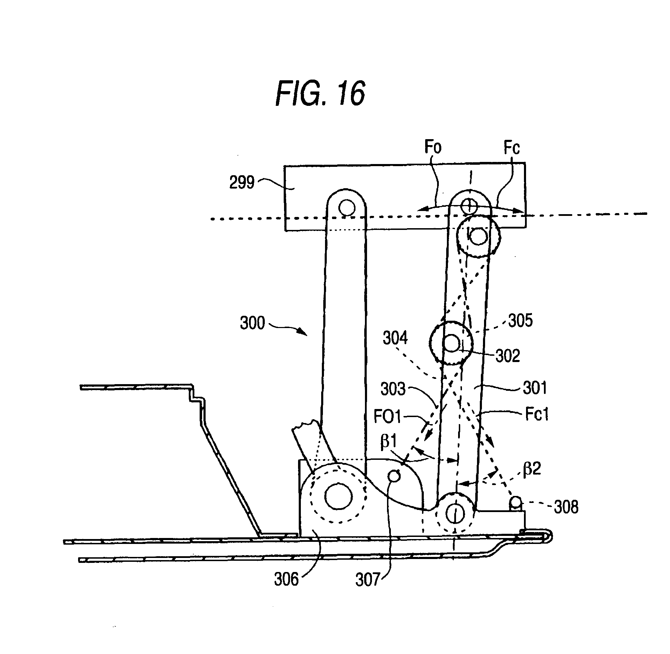

For example, as is shown in Fig. 16, a body side bracket 306 and a slider 299 are connected to each other via a parallel link 300r. In this case, opening and closing intermediate pulleys 302, 305 are pivotally attached on to one arm 301 of the parallel link 300r in a concentric fashion. Thereafter, an opening cable 303 which receives a tensile force Fo1 from a motor side, not shown, when the door is opened is passed round the opening intermediate pulley 302, and a closing cable 304 which receives a tensile force Fc1 from the motor side, not shown, when the door is closed is passed round the closing intermediate pulley 305. Furthermore, the opening cable 303 that has passed round the opening intermediate pulley 302 is fastened to a cable end 307 on the body side bracket 306, and the closing cable 304 that has passed round the closing intermediate pulley 305 is fastened to a cable end 308 on the body side bracket 306.

When the configuration described above is adopted, however, the opening and closing cables 303, 304 which are fastened, respectively, to the cable ends 306, 308 repeat bending in the vicinity of the portions where the cables are fastened to the cable ends as the arm 301 of the parallel link 300r swings, and this tends to easily call for deterioration in durability. Furthermore, although the larger angles β1, β2 formed by the arm 301 and the opening and closing cables 303, 304 which extend from the opening and closing intermediate pulleys 302, 305 on the same arm to the cable ends 307, 308 become, the higher the operation forces Fo1, Fc1 in the opening and closing directions are increased, since the cable ends 307, 308 constitute fixed points, the angles β1, β2 change to increase or decrease, and the operation forces Fo1, Fc1 in the opening and closing directions decrease in a region where the angles β1, β2 decrease to be small, and hence, an improvement has been desired for.

It is therefore an object of the invention to provide a swinging and sliding door opening and closing system which can drive to open and close a swinging and sliding door in an ensured fashion.

This object can be achieved by the features defined in the claims. Particularly, in order to achieve the obj ect, according to the invention, there is provided a swinging and sliding door opening and closing system, comprising:
a door, which is adapted to swing and slide to open and close a door opening in a body of a vehicle, and to which a longitudinally long rail is integrally attached;
a parallel link, adapted to support the door by a pair of front and rear arms, pivotally supporting ends of the arms connected to a fixed member on the body, swinging ends of the arms connected to a slider which is fittingly attached to the rail of the door in a slidable fashion;
a motor driven drum, provided on one of the door and the body;
a cable, adapted to be operated by the drum; and
a cable end, provided on the other of the door and the body, and connected to the cable, the cable end formed with an arc-shaped curved groove round which the cable is wound.

According to an aspect of the invention, there is provided an advantage that the construction of the body side wall can be simplified and good mounting properties to the body can be obtained.

According to an aspect of the invention, since the arc-shaped curved groove is formed on the cable end, the cable can be connected to the door side or the body side without being bent, thereby making it possible to increase the durability of the cable.

Preferably, the drum is provided with the door, and the cable is connected to the body side.

An opening cable may be wound by the drum when the door is opened. A closing cable may be wound by the drum when the door is closed. The opening cable may extend from the drum and be connected to an opening cable end secured to the fixed member. The opening cable may pass round a front-end pulley which is provided at a front end of the rail and an opening intermediate pulley which is provided on the front arm. The opening cable may be wound in a direction in which an amount in which the cable is wound round the opening cable end is decreased as the front arm swings in an opening direction.

According to an aspect of the invention, the angle formed by one of the arms and the opening cable which extends from the intermediate pulley on the same arm becomes relatively large as the parallel link swings in the opening direction, and a component force of the tensile force applied to the opening cable which swings the one of the arms in the opening direction becomes relatively large, whereby the swinging operation force can be made to work with good efficiency. Hence, the motor drive torque and motor size can be reduced further by an amount matching the increase in efficiency with which the swinging operation force works.

An opening cable may be wound by the drum when the door is opened. A closing cable may be wound by the drum when the door is closed. The closing cable may extend from the drum and be connected to a closing cable end secured to the fixed member. The closing cable may pass round a rear-end pulley which is provided at a rear end of the rail and a rear intermediate pulley which is provided on the rear arm. The closing cable may be wound in a direction in which an amount in which the cable is wound round the closing cable end is decreased as the rear arm swings in a closing direction.

According to an aspect of the invention, the angle formed by the arm and the closing cable which extends from the intermediate pulley on the same arm becomes relatively large as the parallel link swings in the closing direction, and a component force of the tensile force applied to the closing cable which swings the other arm in the closing direction becomes relatively large, whereby the swinging operation force can be made to work with good efficiency. Hence, the motor drive torque and motor size can be reduced further by an amount matching the increase in efficiency with which the swinging operation force works.

The invention is described in detail in conjunction with the drawings, in which:
Fig. 1 is a schematic side view of a vehicle which is equipped with a swinging and sliding door opening and closing system as one embodiment of the invention,
Fig. 2 is a perspective view of a main part inside a rear side door shown in Fig. 1,
Fig. 3 is a schematic front view of a swinging and sliding unit in Fig. 1,
Fig. 4 is a schematic side view of the swinging and sliding unit in Fig. 1,
Fig. 5 is an enlarged plan view of the main part of the swinging and sliding unit in Fig. 1,
Figs. 6A, 6B and 6C are explanatory views illustrating functions of a parallel link and an opening and closing drive mechanism of the swinging and sliding unit in Fig. 1. Fig. 6A is a plan view showing a closed position, Fig. 6B is a plan view showing a projecting position, and Fig. 6C is a plan view showing a full open position,
Fig. 7 is an explanatory view illustrating functions of a front arm and an opening cable end which are used in the swinging and sliding unit in Fig. 1,
Fig. 8 is an explanatory view illustrating functions of a rear arm and a closing cable end which are used in the swinging and sliding unit in Fig. 1,
Figs. 9A, 9B and 9C are views showing the opening cable end used in the swinging and sliding unit in Fig. 1. Fig. 9A is a plan view, Fig. 9B is a side sectional view showing a main part, and Fig. 9C is a perspective view thereof,
Figs. 10A and 10B views showing an opening cable end which can be used in place of the opening cable end shown in Fig. 9, Fig. 10A is a plan view, and Fig. 10B is a side sectional view of a main part thereof,
Fig. 11 is an operation explanatory view showing the projecting position of the swinging and sliding unit used in the rear side door in Fig. 1,
Fig. 12 is an operation explanatory view showing the full open position of the swinging and sliding unit used in the rear side door in Fig. 1,
Fig. 13 is an operation explanatory view showing the the door closed position of the swinging and sliding unit used in the rear side door in Fig. 1,
Fig. 14 is a view illustrating a function of an opening and closing drive mechanism in a opening and closing system of a swinging and sliding door as another embodiment of the invention.
Fig. 15 is an explanatory view illustrating functions of a parallel link and an opening and closing drive mechanism of a conventional swinging and sliding door, and
Fig. 16 is an explanatory view illustrating functions of a parallel link and an opening and closing drive mechanism of another conventional swinging and sliding door.

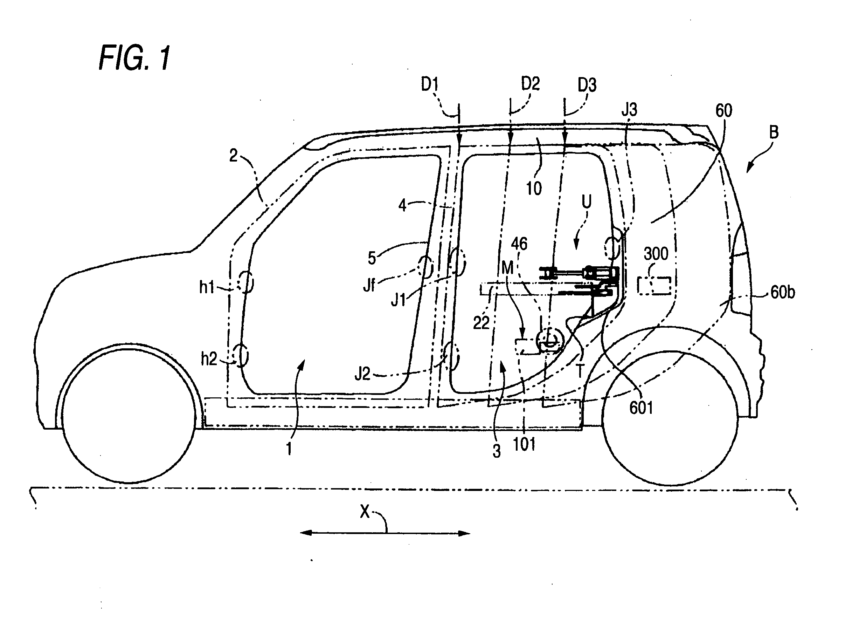

Fig. 1 shows a swinging and sliding door opening and closing system as an example of the invention. This swinging and sliding door (hereinafter, referred to simply as a rear side door) 4 constitutes a rear side door of a 4-door hatchback passenger vehicle (hereinafter, referred to simply as a vehicle).

The vehicle B includes front side doors 2 which open and close left and right front doorways 1, respectively and rear side doors 4 which open and close left and right rear doorways 3. Each front side door 2 is hinge fastened at two upper and lower locations h1, h2 at a front end thereof and is detachably locked at a rear lock portion Jf lying substantially intermediately along a vertical length of a center pillar 5 at a rotating end thereof by the use of a latch and a striker which are not shown.

On the other hand, the rear side door 4 is supported by a swinging and sliding unit U, which will be described later, and is supported in such a manner as to move to a closed position D1 where the door closes the rear doorway 3, a projecting position (a projecting position) D2 which projects further transversely outwards to an outside of the vehicle than the closed position D1 and a fully open position D3 which lies further rearwards than the projecting position D2. The rear side door 4 is detachably locked in two positions on the center pillar 5 at upper and lower lock portions J1, J2 at a front end thereof by the use of a powered latch, which is electric equipment, and a striker in the closed position D1, both the powered latch and the striker being not shown in the figure, while the rear side door 4 is detachably locked on a rear pillar 60 at a rear end lock portion J3 thereof which lies lying substantially intermediately along a vertical length of a rear end thereof by the use of a powered latch, which is electric equipment, and a striker, the powered latch and the striker being not shown in the figure.
A weatherstrip, not shown, is attached to an outer circumferential edge portion of the rear side door 4, and when it is held in the closed position, the rear side door 4 can be brought into close press contact with a circumferential wall surface of the rear doorway 3 by the weatherstrip so attached, thereby making it possible to ensure the sealing properties of the rear side door 4.

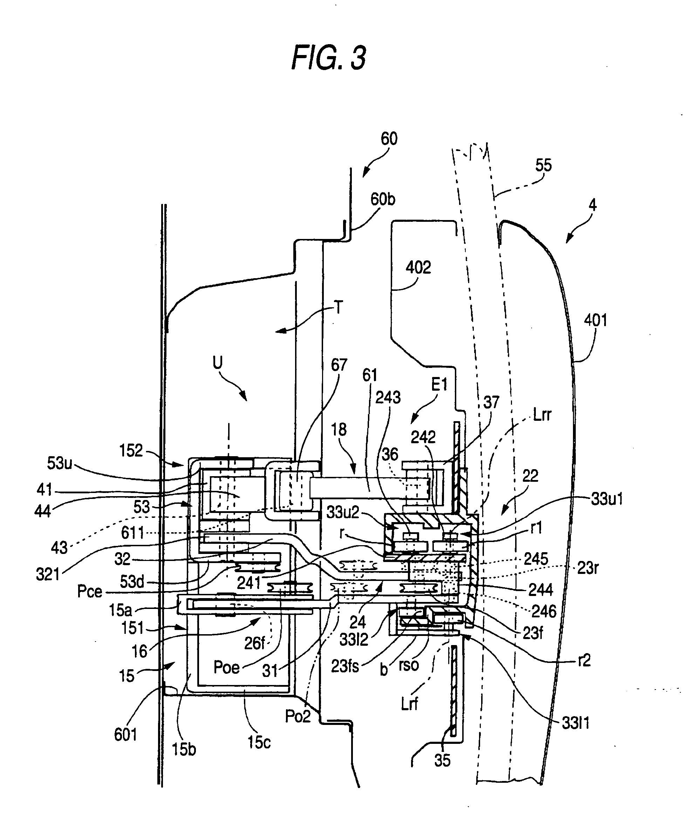

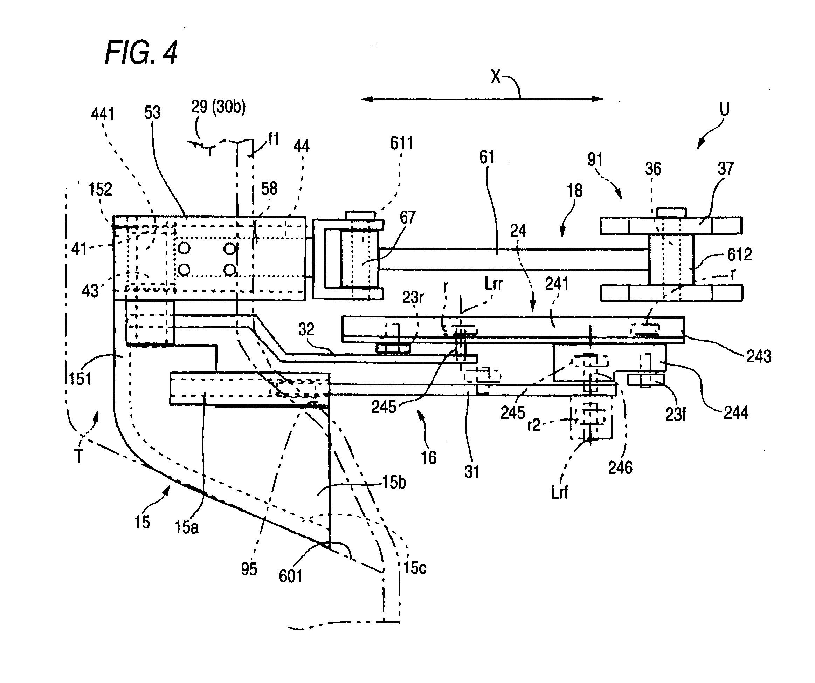

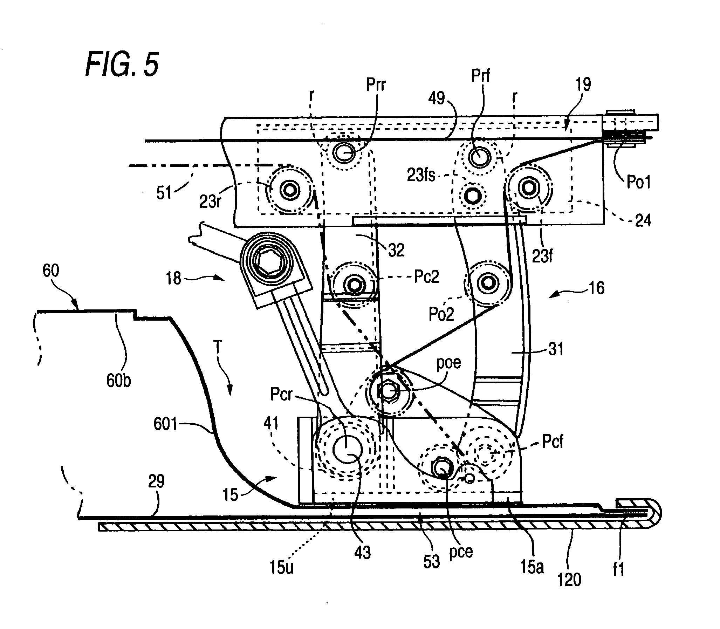

As is shown in Figs. 1, 2, 3, the swinging and sliding unit U which constitutes a main part of the door opening and closing system of the rear side door 4 is attached to the rear pillar 60 which is disposed along the rear doorway 3 in a body in a position which lies in the vicinity of a vertically intermediate portion of the rear pillar 60.
As is shown in Fig. 3, 4, the rear pillar 60 is made up of a front end portion of an outer panel (a quarter panel) 60b which lies at a rear portion of the body, a front end portion of an inner panel 29 (refer to Fig. 5) which lies on an internal side of the outer panel 60b and a reinforcement, not shown. A vertical flange portion f1 is formed in the vicinity of the vertically intermediate portion of the rear pillar 60, and the vertical flange portion f1 is a circumferential edge portion of the rear doorway 3 which is made by welding together the inner panel 29 which constitutes a flat vertical wall and the outer panel 60b which is joined to an external side of the inner panel 29 (hereinafter, referred to simply as a rear vertical flange portion).

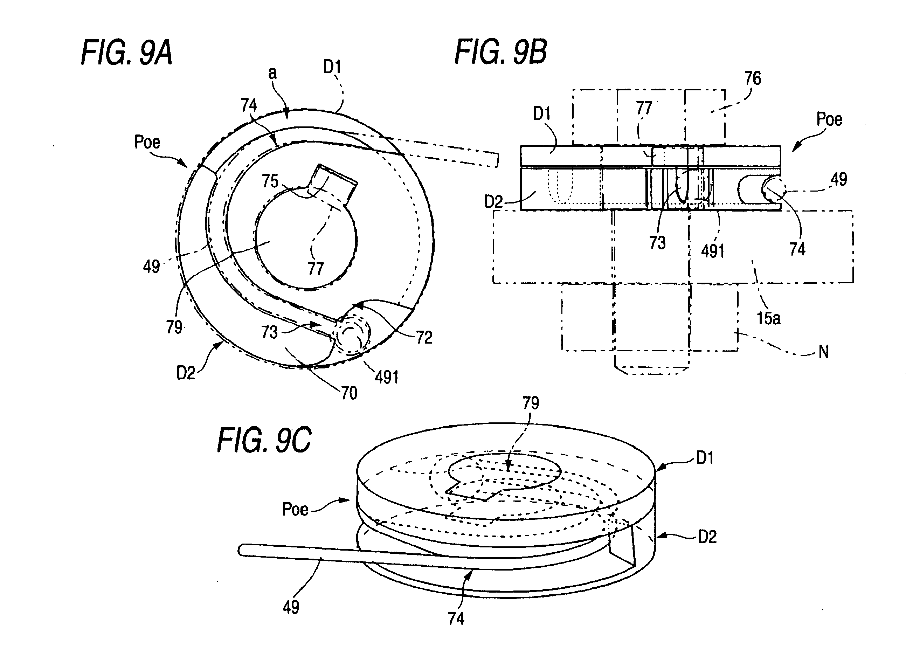

As is shown in Figs. 1, 5, a mounting recessed portion T is formed in part of the rear vertical flange f1. This-mounting recessed portion T is formed in such a manner that its opening is oriented towards the outside of the vehicle (a near side as viewed in Fig. 1), and is positioned below the rear end lock portion J3. Thus, the mounting recessed portion T is formed in such a manner that the swinging and sliding unit U which constitutes the main part of the door opening and closing system can be mounted therein. In addition, a quarter trim 120 is attached on to the rear vertical flange portion f1 and over a vertical wall surface of the inner panel 2 which lies on an internal side of the rear vertical flange portion f1.
As is shown in Figs. 4, 5, a base member 15 which constitutes a base of the swinging and sliding unit U is secured to a lower wall 601 of the mounting recessed portion T of the body. The base member 15 makes up a fixed member of a body side wall, and attached to this base member 15 are a parallel link 16, a door load supporting arm 18, opening cable and closing cable ends Poe, Poc of an opening and closing drive mechanism 19 (refer to Figs. 5, 9A, 9B and 9C) and a plurality of intermediate rollers r, which will be described later.

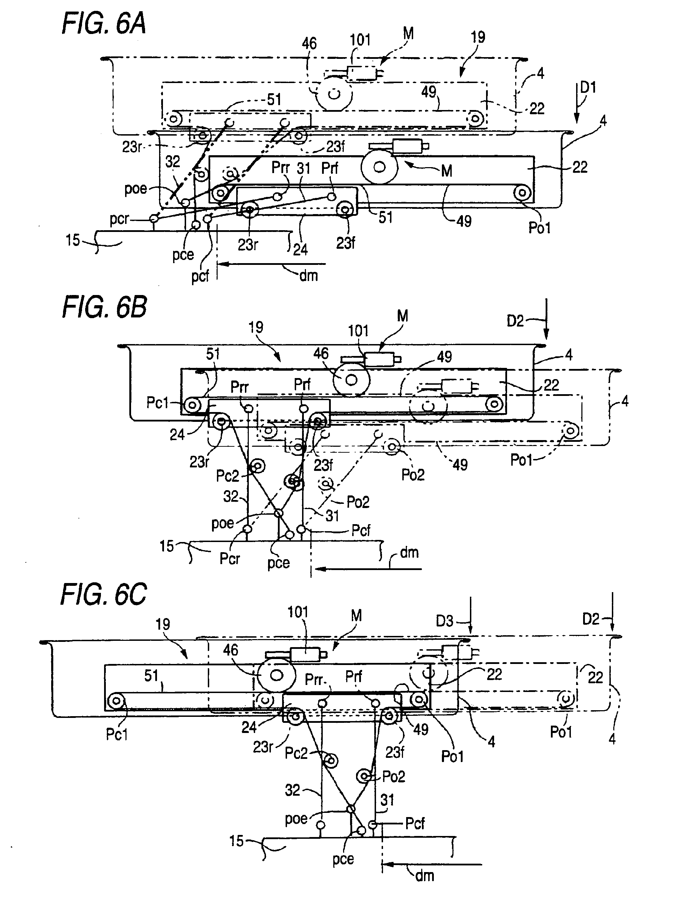

Furthermore, members which are linked with a body side member of the opening and closing drive mechanism 19 is disposed on the rear side door 4 side. Namely, as is shown in Fig. 1, a motor 101 which makes up a drive source M of the opening and closing drive mechanism 19, a winding drum 46 and a plurality of rollers Po1, Pc1, Po2, Pc2 (refer to Figs. 5, 6A, 6B and 6C) are disposed on the rear side door 4 side.
As is shown in Figs. 3, 5, the base member 15 has a shape holding rigidity and includes a lower mounting portion 151 which pivotally supports the parallel link 16 which is made up of a pair of front and rear arms and an upper vertical pillar portion 152 which extends further upwards than the lower mounting portion 151 and which pivotally supports the door load supporting arm 18. The lower mounting portion 151 includes a horizontally oriented flange portion 15a which pivotally supports the parallel link 16 which is made up of the pair of front and rear arms, a lower inclined portion 15b which is welded to reinforce the horizontally oriented flange portion 15a and which extends obliquely downwards and a fastened flange 15c which is bent from the horizontally oriented flange portion 15a to extend further and is bolted down to a forward oriented stepped portion 601 which makes up part of the mounting recessed portion T.

The upper vertical pillar portion 152 includes a proximal end boss portion 41 which pivotally supports a proximal end of the door load supporting arm 18 via a vertical pin 43. A U-shaped fastening bracket 53 (refer to Fig. 3) is superposed on one side of the proximal end boss portion 41, so that the bracket and the boss portion are bolted together. Furthermore, as is shown in Fig. 4, a vertical wall surface of the U-shaped fastening bracket 53 which extends away from a proximal end thereof is superposed on a vertical wall of the mounting recessed portion T, so that both the members are fastened together with a bolt not shown.
As is shown in Figs. 3, 4, the parallel link 14 has a function to position a moving locus and respective positions of the rear side door 4 which swings. Front and rear connecting pins 246, 245 of a front arm 31 and a rear arm 32 of the parallel link 16 are pin connected to portions of a slider 24 which lie in the vicinity of front and rear ends thereof, respectively. The front arm and the rear arm 32 can swing while holding predetermined intervals longitudinally and vertically, and are formed in such a manner as to prevent the interference between both the arms.

Here, the slider 24 is fittingly attached to a door support rail 22 which is integrally joined to an inner panel 402 of the rear side door 4 via the mounting bracket 35. In addition, the mounting bracket 35 is a bent plate member having such a shape as to cover a central main part of an inner wall of the inner panel 402 and mounts integrally a door side pivotally supporting portion 37, which will be described later, in the vicinity of a position where a center of gravity of the door lies.
As is shown in Fig. 3, front, rear and lower outer circumferential edge portions of an outer panel 401 and the inner panel 402, which is disposed opposite to the outer panel 401 across an inner space of the door, of the rear side door 4 are joined integrally to each other, and furthermore, an opening is formed between upper circumferential edge portions of both the panels. This opening is formed as an area where a door glass, not shown, is operated to be raised and lowered and in such a manner that a sash 55 as a support member for the door glass can be mounted.

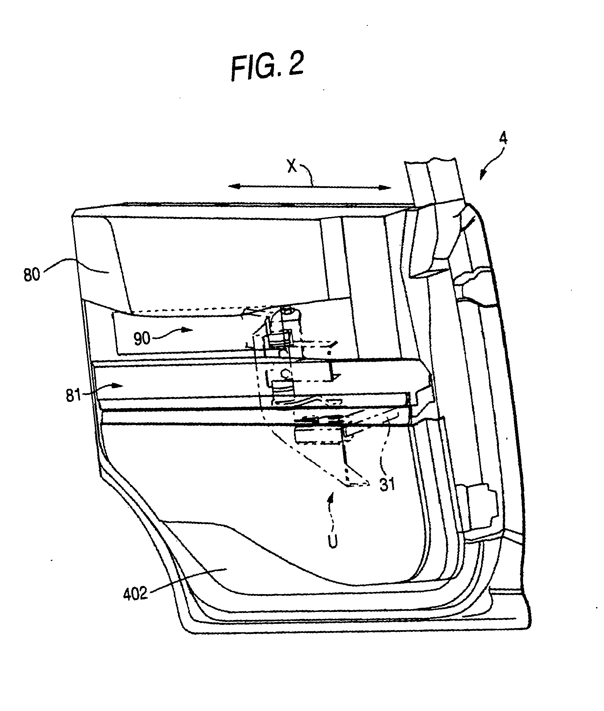

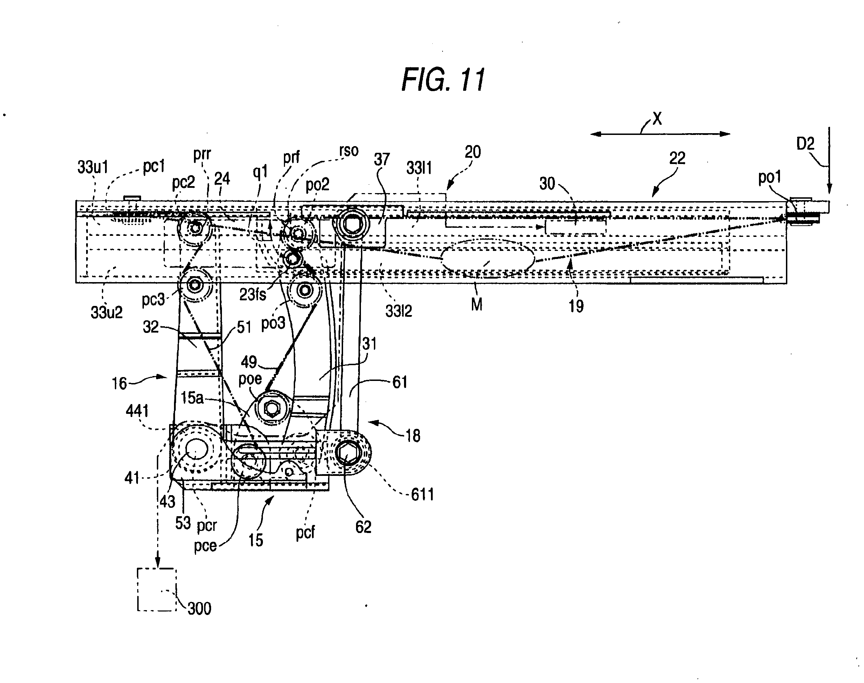

In addition to the door glass, the opening and closing drive mechanism 19 and a controller 30 as a control unit are mounted in the space in the door. As is indicated by a chain double-dashed line in Fig. 11, the controller 30, a body side power supply (not shown) and a min controller 300 are connected to one another by a wiring harness 20.
As is shown in Fig. 2, an internal surface of the inner panel 402 of the rear side door 4 is covered with a trim 80. The trim 80 has a slit 81 which is formed therein in such a manner as to extend long in a longitudinal direction X for insertion of the front and rear arms 31, 32 of the parallel link 16 and is locked on the whole of the internal surface of the inner panel 402 (refer to Fig. 3) with locking means, not shown. Amounting hole 90 is formed in a center of an upper portion of the trim 80 into which the door side pivotally support portion 37 is fitted. As described above, this door side pivotally support portion 37 is made integral with the inner panel 402 and is pin connected with the door load support arm 18 side. The door load support arm 18 will be described below.

As is shown in Figs. 1, 3, 4, the door load support arm 1 is mounted above the parallel link 16. The door load support arm 18 is pivotally supported at the proximal end boss portion 41 formed on the upper vertical pillar portion 152 lying at the upper portion of the base member 15 which is pivotally supported on the body side via the first vertical pin 43 at a proximal end portion 441 of a first support arm 44 thereof. A proximal end portion 611 of a second support arm 61 is pivotally supported at a rotating end of the first support arm 44 via a second vertical pin 62, and a swinging end 612 constituting the other end of the second support arm 61 pivotally supports the door side pivotally support portion 37 which lies in the vicinity of the position where the center of gravity of the rear side door 4 lies via a third vertical pin 36.

The first support arm 44 and the second support arm 61 which make up the door load support arm 18 configured as described above are formed of a ridged member as a bar-shaped member having a vertically long cross section. By this configuration, even when a vertical door load is applied to the door load support arm 18, the deformation thereof can be suppressed, and the door load support arm 18 can transmit the load at the center of gravity of the rear side door 4 to the base member 15 at all times. As this occurs, as is shown in Figs. 11 to 13, the door load support arm 18 supports the load of the rear side door 4 in an ensured fashion in whichever position of the closed position D1, the projecting position D2 and the full open position D3 it may move to be situated, thereby making it possible to restrict the inclination of the rear side door 4.

A main part of the wiring harness 20 is supported on the door load support arm 18. Namely, as is indicated by a chain double-dashed line in Fig. 11, the wiring harness 20 is made up by binding together wirings of electric equipment within the rear side door 4 such as, for example, the motor 101 which makes up the drive source M of the opening and closing drive mechanism 19, a power window regulator, not shown, powered latches 6, 8 of the front and rear end lock portions J1, J2, J3, a latch sensor, not shown, and the controller 30, and the wiring harness 20 so made up is connected to the body side power supply (not shown) and the main controller 300. The wiring harness 20 extends from the body side and is sequentially fastened to side walls of the proximal end portion 441 of the door load support arm 18, the first support arm 44, the second support arm 61, the swinging end 612 and the door side pivotally support portion 37 by the use of resin made clips, not shown. The wiring harness 20 then reaches the internal space side of the rear side door 4 to be connected to the controller 30 which is a control unit.

As is shown in Figs. 3, 11, a main rail groove 33u1 and a sub-rail groove 33u2 whose openings are oriented downwards and a main rail groove 3311 whose opening is oriented downwards and a sub-rail groove 3312 whose opening is oriented upwards are formed in an interior of the door support rail 22 in such a manner as to extend long in the longitudinal direction X, and the slider 24 is fittingly inserted in the interior of the door support rail 22 via front and rear outer rollers r1, r2 and a plurality of rollers r.
As is shown in Figs. 3, 4, the slider 24 includes upper and lower base plates 241, 244 which are formed into plate shapes which are long in the longitudinal direction X and are connected together, a pair of parallel vertically long walls 242, 243 which project from an upper surface of the upper base plate 241 and which are made long in the longitudinal direction X, a rear connecting pin 245 which pin connects the swinging end of the rear arm 32 to a front portion of the upper base plate 241 in such a manner as to swing thereat, and a front connecting pin 246 which extends further downwards than a downward wall lying closer to a front (a right-hand side in Fig. 4) of the lower base plate 244 and which pin connects the swinging end of the front arm 31 in such a manner as to swing thereat.

A cutout hole is formed in a main part of the vertically long wall 242 (refer to Fig. 3) into which the rear outer roller r1 is loosely fitted, and the rear outer roller r1 is pivotally supported on the vertically long wall 242 via a vertically oriented rear pivot pin. This rear outer roller r1 is disposed on a rear swing center axis Lrr which is in common with the rear connecting pin 245.
A vertically oriented front pivot pin is disposed on a front swing center axis Lrf which is in common with the front connecting pin 246 which lies closer to the front of the lower base plate 244, and the front pivot pin pivotally supports the front outer roller r2 at the branched swinging end of the front arm 31.

By this configuration, the slider 24 which is pivotally supported relative to the parallel link via the outer front and rear swing center axes Lrf, Lrr thereof is made to swing by the parallel link 16, and the door support rail 22 can be made to slide easily in the longitudinally direction X relative to the rear outer roller r1 and the front outer roller r2 of the slider 24. In addition, points of the front and rear swing center axes Lrf, Lrr which result as viewed from the top thereof are shown as front and rear swing center points Prf, Prr in Figs. 5, 6A, 6B and 6C.

As is shown in Figs. 11 to 13, the upper downwardly oriented rail grooves 33u1, 33u2 of the door support rail 22 are formed long along the whole area thereof in the longitudinal direction X. On the other hand, the lower downwardly oriented main rail groove 3311 and lower upwardly oriented sub-rail groove 3312 are, as is formed in Fig. 11, formed as far as a longitudinally intermediate portion of the door support rail 22 and are not formed in a rear portion (on a left-hand side as viewed in Fig. 11) of the door support rail 22. The front outer roller r2 at the swinging end of the front arm 31 and a sub-front roller 23fs which lies in the vicinity of the front outer roller r2 which are to be fitted in the lower downwardly oriented main rail groove 3311 and the lower upwardly oriented sub-rail groove 3312 are allowed to be fittingly inserted into the associated rail grooves. In particular, by the front outer roller r2 being brought into abutment with a stopper wall portion rs0 of the lower downwardly oriented main rail groove 3311, a relative further forward sliding of the door support rail 22 is prevented, so as to restrict the projecting position D2 of the door support rail 22 (the rear side door 4).

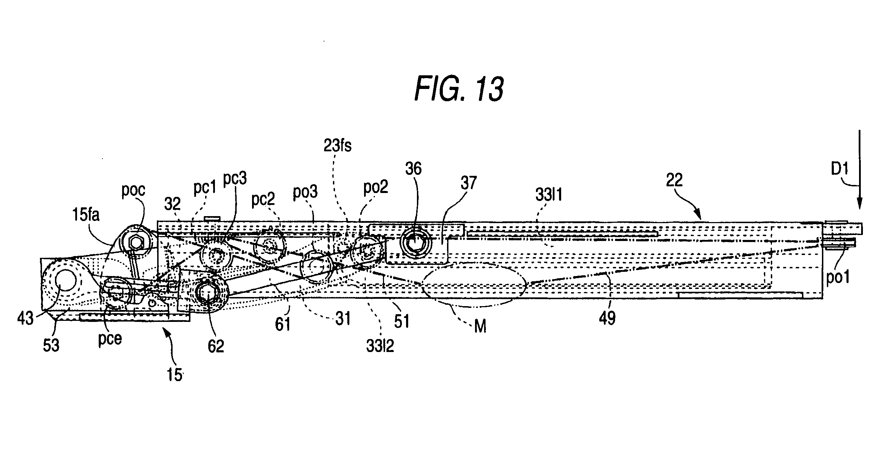

Because of this, when the front arm 31 swings about a front arm swing reference point Pcf (refer to Fig. 5), that is, when the front arm 31 swings relatively about the center axis of a front roller 23f (about the external swing center point Prf) in the projecting position D2, the sub-front roller 23fs side which lies in the vicinity of the front outer roller r2 rotates in such a manner as to draw an arc (refer to an arrow followed by a chain double-dashed line in Fig. 11) q1 about the center axis Lrf of the front outer roller r2. In this state, the sub-front roller 23fs is displaced while held in roller contact with an outside of the stopper wall portion rs0, whereby the center axis of the front roller 23f is prevented from being shifted in the longitudinal direction X. By the front arm 31 swinging relatively about the center axis of the front roller 23f, the door support rail 22 (the rear side door 4) is allowed to swing from the projecting position D2 to the closed position D1 shown in Fig. 13. As this occurs, as is shown in Fig. 13, the sub-front roller 23fs reaches a curved deepest portion of the upwardly oriented sub-rail groove 3312.

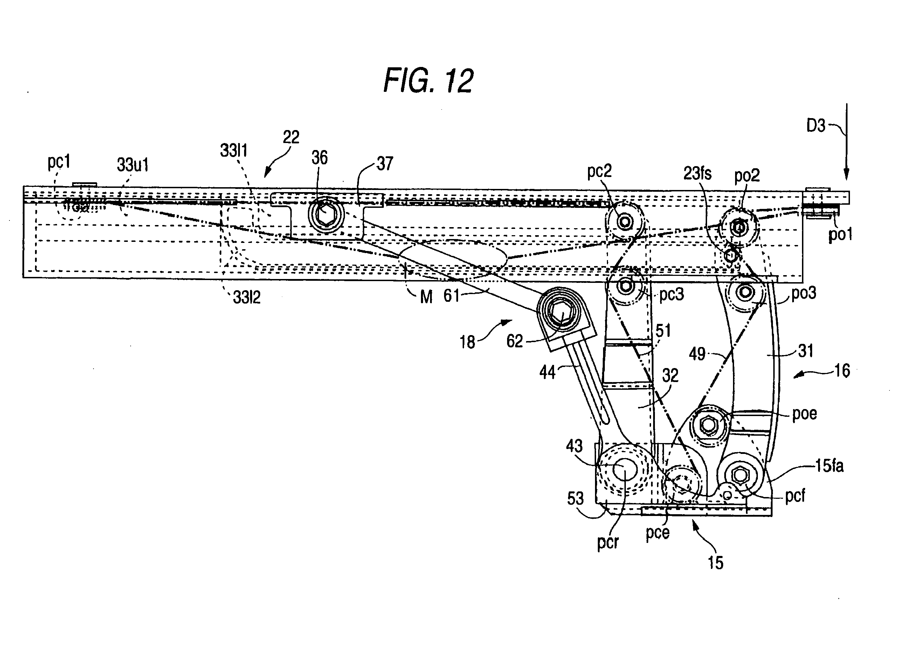

On the other hand, when the front arm 31 swings about the front arm swing reference point Pcf, the front outer roller r2 comes into abutment with the stopper wall portion rs0 of the downwardly orientedmain rail groove 3311, the door support rail 22 (the rear side door 4) reaches the projecting position D2, and the door support rail 22 (the rear side door 4 side) slides rearwards towards the full open position D3, as is shown in Fig. 12, the near sub-front roller 23fs is facing oppositely a rectilinear portion from the curved portion in the upwardly oriented sub-rail groove 3312, and the front outer roller r2 and the sub-front roller 23fs slide relatively in a smooth fashion along the downwardly oriented main rail groove 3311 and the upwardly oriented sub-rail groove 3312, whereby the door support rail 22 (the rear side door 4 side) can be made to move to the full open position D3 as is shown in Fig. 12.

Next, the opening and closing drive mechanism 19 of the swinging and sliding unit U which is disposed in the rear side door 4 will be described.
As is shown in Fig. 1, the opening and closing drive mechanism 19 has a function to move from the closed position D1 to the full open position 3 via the projecting position D2 by virtue of rotational force of the motor 101 which makes up the drive source of the rear side door 4 and the winding drum 46.

As is shown in Figs. 6A to 6C, the opening and closing drive mechanism 19 includes the motor 101 which is provided in the interior of the rear side door 4, the winding drum 46 which is driven by the motor to perform winding and unwinding operations, an opening cable 49 and a closing cable 51 which are wound round the winding drum 46 in such a manner as to be freely unwound, the end portion pulley Po1 at the front end of the door support rail 22 round which the opening cable 49 is passed, the end portion pulley Pc1 at the rear end of the door support rail 22 round which the closing cable 51 is passed, a first pulley 23f at a front end portion of the slider 24, the second pulley Po2 (the front intermediate pulley) on the first arm 31, the opening cable end Poe which is supported on the horizontal flange portion 15a and to which an anchor portion of the opening cable 49 is connected, a first pulley 23r on a rear end portion of the slider 24, the second pulley Pc2 (the rear intermediate pulley) on the rear arm 32, and the closing cable end Pce which is supported on a lower flange 53d of the U-shaped fastening bracket 53 (refer to Fig. 3) and to which an anchor portion of the closing cable 51 is connected.

Here, the opening cable end Poe of the opening cable 49 and the closing cable end Pce of the closing cable 51 are formed laterally symmetrical, and hence, here, the opening cable end Poe will mainly be described.
Specifically, as is shown in Figs. 9A to 9C, the opening cable end Poe includes a pair of plate-shaped half portions D1, D2 which are joined to each other and is made up of a disc-shaped main portion 70, a mounting hole 79 which is formed in a center of the main portion 70, a cable locking wall 72 which is formed in a position which is relatively near the mounting hole 79, a bend groove 74 which extends spirally to a position which lies closer to an outer circumferential wall than the locking hole 73 and a key groove 75 formed partially in the mounting hole 79.

The locking hole 73 is formed in such a manner that a swollen portion 491 at an end portion of the opening cable 49 is locked by a circumferential edge of an opening thereof so as to exhibit a function to prevent the dislocation of the opening cable 49. The curved groove 74 which continues to the locking hole 73 has a cutout open area a so as to allow the opening cable 49 to easily be pulled outwards from a wound state. The key groove 75 locks a key 77 which is fittingly attached to an anchor bolt 76 which is inserted into the mounting hole 79, so as to prevent the rotation of the opening cable end Poe. In addition, the anchor bolt 76 is inserted into a through hole in the horizontal flange portion 15a and thereafter, a nut N is screwed thereon. By this configuration, the opening cable end Poe is fastened to the horizontal flange portion 15a in such a state that the opening cable end Poe is held in a predetermined direction relative to the front arm 31 of the parallel link.

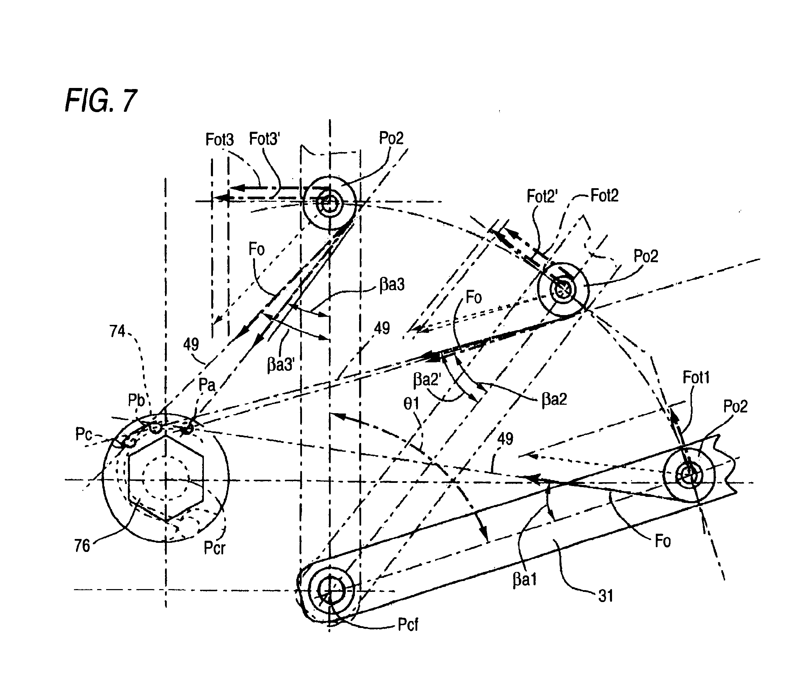

Here, as is shown in Fig. 7, even in the event that the pulling out direction of the opening cable 49 which extends from the opening cable end Poe changes within a range of displacement angle θ1 when the front arm 31 swings, that is, in the event that a tensioning direction of the opening cable 49 changes as the front arm 31 swings, the opening cable 49 can be displaced to be pulled out or unwound, whereby no bend portion is generated on the opening cable 49, there by making it possible to increase the durability of the opening cable 49.

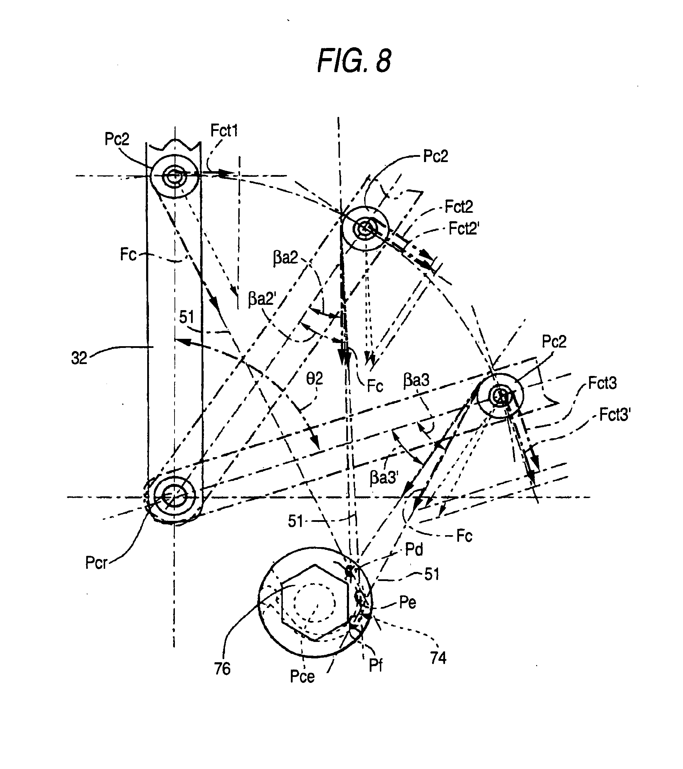

Similarly, as is shown in Fig. 8, even in the event that the pulling out direction of the closing cable 51 which extends from the closing cable end Pce changes within a range of displacement angle θ2 when the rear arm 32 swings, that is, in the event that a tensioning direction of the closing cable 51 changes as the rear arm 32 swings, the closing cable 51 can be displaced to be pulled out or unwound, whereby no bend portion is generated on the closing cable 51, there by making it possible to increase the durability of the closing cable 51.

Next, the operation of the rear side door 4 will be described.
Let's assume that the rear side door 4 is held in the closed position D1 before the controller 30 is given a door opening command. As this occurs, the respective powered latches 6, 8 of the front end upper lock portion J1, the front end lower lock portion J2 and the rear end lock portion J3 on the rear door 4 side are held deenergized while holding their locking state.
In this case, as is shown in Figs. 6A, 11, the swinging ends of the rear arm 32 and the front arm 31 are withdrawn transversely inwards (downwards as viewed in Fig. 6A), and the door support rails 22 holds the rear side door 4 in the closed position (refer to Fig. 1) D1 together with the slider 24 at the swinging ends of both the arms.

Here, in the opening and closing mechanism 19, the drum 46 which is driven to wind up the opening cable 49 and the closing cable 51 by the motor 101 is disposed within the door 4, and the closing cable end Pce and the opening cable end Poe are connected to the base member 15 (the fixed member) on the body side wall, however, the tensile forces of both the cables are eliminated.
Next, when the controller 30 receives a door opening command, the controller 30 issues an unlocking output to the respective powered latches 6, 8 of the front end upper lock portion J1, the front end lower lock portion J2 and the rear end lock portion J3 of the rear side door 4 which is being in the closed position D1 via the wiring harness 20.

Furthermore, when the controller 30 receives a door opening output based on the door opening command, the drum 46 winds up the opening cable 49 and unwinds the closing cable 51. As this occurs, the opening cable 49 is connected to the opening cable end Poe after having passed round the end portion pulley Po1, the first pulley 23f at the front end of the slider 24, and the second pulley Po2 (the front intermediate pulley) of the front arm 31. Because of this, a distance between the opening cable end Poe (a fixed end of the opening cable) and the second pulley Po2 (the front intermediate pulley) on the front arm 31 is narrowed by virtue of a tensile force applied to the opening cable 49 which lies between the opening cable end Poe and the second pulley Po2, whereby the swinging end of the front arm 31 swings integrally transversely outwards, and as is shown in Fig. 6B and 11, the door is allowed to swing to the projecting position D2 side.

As this occurs, the front arm 31 swings about the front arm swing reference pint Pcf and holds a state in which the front outer roller r2 at the swinging end of the front arm 31 is in abutment with the stopper wall portion rs0 of the lower downwardly oriented main rail groove 3311. Furthermore, the sub-front roller 23fs lying near the front roller 23f is held in roller contact with the external side of the stopper wall portion rs. Thus, the center axis of the front outer roller 2r is prevented from being shifted in the longitudinal direction X, whereby the swinging displacement of the parallel link is implemented in an ensured fashion.
Furthermore, when the controller 30 is receiving the door opening output, in the event that the winding drum 46 continues to be driven to wind up the opening cable 49 indicated by a solid line and unwind the closing cable 51 indicated by a solid line, the rear side door 4 passes through the projecting position D2 side. As this occurs, the door support rail 22 side slides towards the full open position D3 shown in Figs. 6C, 12 relatively to the slider 24 at the swinging end of the parallel link 16 which is being stopped to swing.

When the door support rail 22 side (the rear side door 4 side) slides rearwards towards the full open position D3, as is shown in Figs. 11, 12, the near sub-front roller 23fs is facing oppositely the rectilinear portion from the curved portion of the upwardly oriented sub-rail groove 3312, and the front outer roller r2 and the sub-front roller 23fs slide relatively in a smooth fashion along the downwardly oriented main rail groove 3311 and the upwardly oriented sub-rail groove 3312, whereby as is shown in Fig. 12, the door support rail 22 (the rear side door 4) can be caused to move to the full open position D3.

In performing this door opening operation is performed, when the front arm 31 swings, the pulling out direction of the opening cable 49 which extends from the opening cable end Poe changes within the range of displacement angle θ1, that is, as is shown in Fig. 7, the position where the opening cable 49 which extends from the second pulley po2 (the opening intermediate pulley) is wound round the curved groove 74 changes sequentially in the order of Pa, Pb, Pc in a direction in which the wound amount of the opening cable 49 on the opening cable end Poe is reduced as the front arm 31 swings in the opening direction or in such a manner as to withdraw from the front arm 31.

As this occurs, a component force (a tangential component force) of a tensile force Fo applied to the second pulley Po2 which swings the front arm 31 in the opening direction changes, as is shown in Fig. 7, to Fot1, Fot2, Fot3, whereby the angle βa1 (reference) formed by the opening cable 49 which reaches the opening cable end Poe from the second pulley Po2 (the front intermediate pulley) and the front arm 31 changes to βa2, βa3.

In this case, compared with a case where the fastened position of the opening cable 49 is fixed to Pa, the angle formed the opening cable 49 and the front arm 31 increases to βa2', βa3' when the position where the opening cable 49 is wound round the curved groove 74 changes from Pa to Pb, Pc. In response to this, as is shown in Fig. 7, the component force Fot1 (the tangential component force) which swings the front arm 31 in the opening direction also increases from Fot2, Fot3 to Fot2', Fot3'. Namely, the operating force in the opening direction applied to the front arm 31 becomes relatively large, the door opening operation properties being thereby increased.

Next, when receiving a door closing command, the controller 30 outputs a door closing output to the motor 101 based on the command so received, so as to drive the winding drum 46 to wind up the opening cable 51 indicated by the solid line and unwinds the opening cable 49 indicated by the solid line. As this occurs, an interval between the end portion pulley Pc1 at the rear of the door support rail 22 and the first pulley 23r at the rear of the slider 24 round which the closing cable 51 is passed is narrowed, and the door support rail 22 returns to the projecting position D2 shown in Fig. 6B. Following this, an interval between the second pulley Pc3 (the rear intermediate pulley) on the rear arm 32 which lies in the projecting position D2 and the closing cable end Pce to which the end portion of the closing cable 51 is connected is narrowed by a tensile force applied to the closing cable 51, whereby the rear arm 32 swings about the front arm swing reference point Pcf (refer to Fig. 6B) in the closing direction to thereby reach the closing position D1 shown in Fig. 6A, and the rear side door 4 closes the rear doorway 3. As this occurs, the controller 30 receives a door closed signal from a position sensor, not shown, which signals that the rear side door 4 has reached the closed position D1.

In response to this, the controller 30 issues a lock output to the respective powered latches (not shown) of the front end upper lock portion J1, the front lower lock portion J2 and the rear end lock portion J3 via the wiring harness 20, so as to lock the rear side door 4 in the rear doorway 3, and a locked signal is then inputted into the controller 30.
In performing the door closing operation like this, when the rear arm 32 swings, the pulling out direction of the closing cable 51 which extends from the closing cable end Poe changes within the range of displacement angle θ1 (=θ2), that is, as is shown in Fig. 8, the position where the closing cable 51 which extends from the second pulley po2 (the closing intermediate pulley) is wound round the curved groove 74 changes sequentially in the order of Pd, Pe, Pf in a direction in which the wound amount of the closing cable 51 on the closing cable end Pce is reduced as the rear arm 32 swings in the closing direction or in such a manner as to withdraw from the rear arm 32.

As this occurs, a component force (a tangential component force) of a tensile force Fc applied to the second pulley Pc2 which swings the rear arm 32 in the closing direction changes, as is shown in Fig. 8, to Fct1, Fct2, Fct3, whereby the angle βb1 (reference) formed by the closing cable 51 which reaches the closing cable end Pce from the second pulley Pc2 (the rear intermediate pulley) and the rear arm 32 changes to βb1, βb2, βa3.
In this case, compared with a case where the fastened position of the closing cable 51 is fixed to Pd, the angle βb1 (reference) formed the closing cable 51 and the rear arm 32 increases to βb2', βb3' when the position where the closing cable 51 is wound round the curved groove 74 changes from Pd to Pe, Pf. In response to this, as is shown in Fig. 8, the component force Fct1 (reference) which swings the rear arm 32 in the closing direction also increases from Fct2, Fct3 to Fct2', Fct3'. Namely, the operating force in the closing direction applied to the rear arm 32 becomes relatively large, the door closing operation properties being thereby increased.

In the embodiment, the opening and closing cable ends Poe, Poc used in the swinging and sliding unit U disclosed in the door opening and closing system shown in Fig. 1 obtain the rotation preventive function realized by the key 77 which is fittingly attached to the bolt 76.

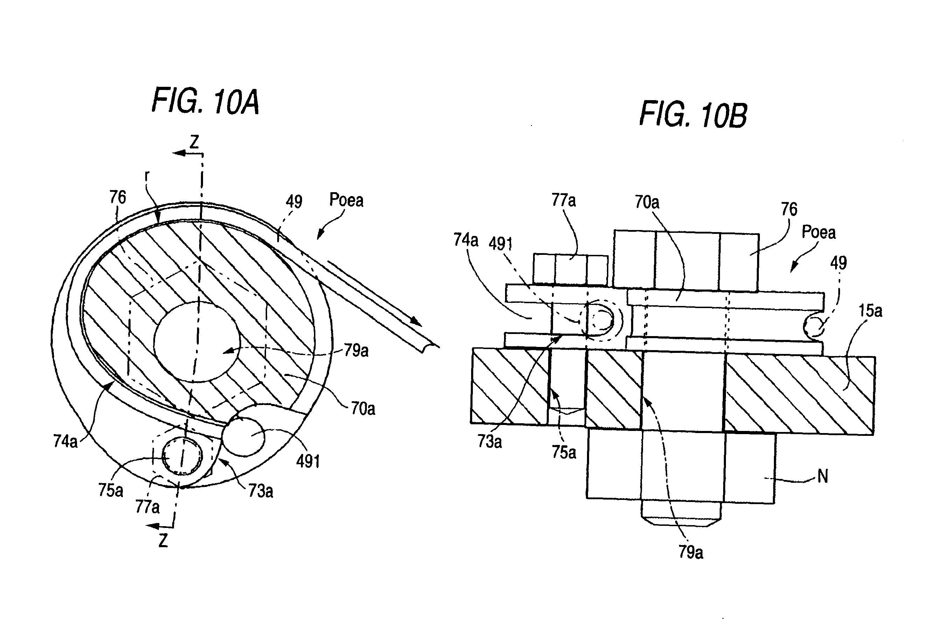

In place of this, an opening cable end Poea as shown in Figs. 10A and 10B may be adopted. In addition, in this case, too, a closing cable end Pcea, not shown, is formed laterally symmetrical with the opening cable end Poea, and hence, the description of the latter will be omitted here to avoid the repletion of similar description.
As is shown in Figs. 10A, 10B, the opening cable end Poea includes a disc-shaped main portion 70a, a mounting hle 79a which is formed in a center of the main portion 70a, a cable locking wall 72a which is formed in a position which is relatively close to the mounting hole 79a, a curved groove 74a which is formed spirally in a position closer to an outer circumferential wall than the cable locking wall 72a, and a lock hole 75a which is formed in the vicinity of the cable locking wall 72a on the curved groove 74a.

A slit 73a is formed in the cable locking wall 72a in such a manner as to constitute a proximal end of the curved groove 74a, and the slit 73a is formed in such a manner that a swollen portion 491 at an end portion of an opening cable 49 is locked by a circumferential edge of the slit 73a so as to exhibit a function to prevent the dislocation of the opening cable 49. The curved groove 74a starts to gradually decrease its groove depth from the position of the slit 73 formed at the proximal end thereof, and then, a curved groove portion r having a constant groove depth is formed.

An anchor bolt 76 is inserted into the mounting hole 79a and is then passed through a penetrating hole h1 in a horizontal flange portion 15a, a nut N being thereafter screwed on the anchor bolt 76. A lock hole 75a provided in the vicinity of the slit 73a is formed in such a manner that an interval in which the opening cable 49 can be held is formed between a deepest wall portion of the curved groove 74a and itself. Because of this, by a lock bolt 77a being inserted to the lock hole 75a so as to be securely screwed into a lock hole h2 in the horizontal flange portion 15a with the opening cable 49 held in the curved groove 74a, the dislocation of the opening cable 49 can be prevented, and the opening cable end Poe can be fastened to the horizontal flange portion 15a in such a state that the opening cable end Poe is held in a predetermined direction relative to a front arm 31 of a parallel link. In this case, compared with the opening cable end Poe shown in Figs. 9A to 9C, the necessity of forming the main body into tow halves can be obviated, and hence, the configuration can be simplified to some extent, a reduction in cost being thereby realized.

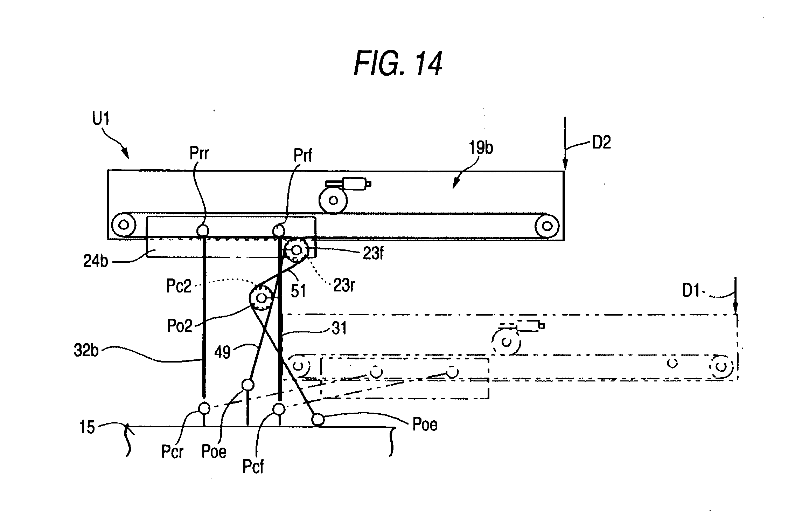

In the embodiment, while in the swinging and slide unit U of the door opening and closing system shown in Fig. 1, the opening cable 49 is locked on to the front arm 31 via the second pulley Po2 (the open intermediate pulley) while the closing cable 51 is locked on to the rear arm 32 via the second pulley Pc2 (the closing intermediate pulley), the invention is not limited thereto, and hence, a swinging and sliding unit U1 that is configured as is shown in Fig. 14 may be used.

In this case, a configuration is adopted in which front and rear first pulleys 23f, 23r are pivotally supported in a concentric fashion in the vicinity of a swing center point Prf of a front arm 31b and a second pulley Po2 (an opening intermediate pulley) and a second pulley Pc2 (a closing intermediate pulley) are pivotally supported in a concentric fashion in an intermediate position of the front arm 31b. Here, by driving an opening and closing drive mechanism 19b, the front and rear arms 31b, 32b swing respectively about front and rear arm swing reference points Pcf, Pcr, and as this occurs, a slider 24b to which front and rear swinging ends Prf, Prr of the front and rear arms 31b, 32b are pivotally attached swings between a closed position D1 and a projecting position D2. In this case, a cable end Pce of a closing cable 51 and a cable end Poe of an opening cable 49 are disposed respectively before and after the front arm swing reference point Pcf. In this case, too, the opening and closing cable ends Poe, Pce used herein are the same as those described be reference to Figs. 7, 8, and the same function and advantage as those obtained in the embodiment can be obtained, as well.

## Claims

1. A swinging and sliding door opening and closing system, comprising:
a door, which is adapted to swing and slide to open and close a door opening in a body of a vehicle, and to which a longitudinally long rail is integrally attached;
a parallel link, adapted to support the door by a pair of front and rear arms, pivotally supporting ends of the arms connected to a fixed member on the body, swinging ends of the arms connected to a slider which is fittingly attached to the rail of the door in a slidable fashion;
a motor driven drum, provided on one of the door and the body;
a cable, adapted to be operated by the drum; and
a cable end, provided on the other of the door and the body, and connected to the cable, the cable end formed with an arc-shaped curved groove round which the cable is wound.

2. The swinging and sliding door opening and closing system as set forth in claim 1, wherein
an opening cable is wound by the drum when the door is opened,
a closing cable is wound by the drum when the door is closed,
the opening cable extends from the drum and is connected to an opening cable end secured to the fixed member,
the opening cable passes round a front-end pulley which is provided at a front end of the rail and an opening intermediate pulley which is provided on the front arm, and
the opening cable is wound in a direction in which an amount in which the cable is wound round the opening cable end is decreased as the front arm swings in an opening direction.

3. The swinging and sliding door opening and closing system as set forth in claim 1 or 2, wherein
an opening cable is wound by the drum when the door is opened,
a closing cable is wound by the drum when the door is closed,
the closing cable extends from the drum and is connected to a closing cable end secured to the fixed member,
the closing cable passes round a rear-end pulley which is provided at a rear end of the rail and a rear intermediate pulley which is provided on the rear arm, and
the closing cable is wound in a direction in which an amount in which the cable is wound round the closing cable end is decreased as the rear arm swings in a closing direction.
